# EUROPÄISCHE PATENTSCHRIFT

(11) **EP 3 370 990 B1**
(45) Veröffentlichungstag und Bekanntmachung des Hinweises auf die Patenterteilung: **03.07.2019**
(21) Anmeldenummer: 16787826.3
(22) Anmeldetag: 26.10.2016
(51) Int. Cl.: B60K 15/03

(54) **KUNSTSTOFFBEHÄLTER MIT TOPFARTIGEM EINBAUKÖRPER**
PLASTIC CONTAINER HAVING A POT-LIKE INSERT BODY
RÉSERVOIR EN PLASTIQUE À ÉLÉMENT ENCASTRABLE EN FORME DE POT

(30) Priorität: 02.11.2015 DE 102015221377
(43) Veröffentlichungstag der Anmeldung: 12.09.2018
(73) Patentinhaber: TI Automotive Technology Center GmbH, 76437 Rastatt (DE)
(72) Erfinder: EHLER, Alex, 76437 Rastatt (DE); BOECKER, Albert, J., 76275 Ettlingen (DE); GMÜND, Patrick, 76149 Karlsruhe (DE); GRAUER, Peter, 76872 Steinweiler (DE); MICHAELIS, Gerrit, 76448 Durmersheim (DE); OLBRICH, Matthias, B., 76437 Rastatt (DE); CHEHADE, Ahmad, 76316 Malsch (DE); HAOUALA, Moez, 76185 Karlsruhe (DE)
(74) Vertreter: Gauss, Nikolai
(86) Internationale Anmeldenummer: PCT/EP2016/075742
(87) Internationale Veröffentlichungsnummer: WO 2017/076707

(56) Entgegenhaltungen:
- EP-A1- 0 203 244
- WO-A1-2006/051117
- WO-A1-2008/006833
- DE-A1-102013 226 295

## Beschreibung

Die Erfindung betrifft einen Kunststoffbehälter, insbesondere Kunststoff-Kraftstoffbehälter, mit einem im Behälterinneren angeordneten, topfartigen Einbaukörper, sowie ein Verfahren zum Einbau eines Einbaukörpers in einen Kunststoffbehälter, vorzugsweise eines Tankmoduls in einen Kunststoff-Kraftstoffbehälter.

Bei Kraftstoffbehältern besteht zunehmend der Wunsch, das sogenannte Tankmodul, ein Einbaukörper der ein gewisses Kraftstoffvolumen aufnimmt und in dem eine Kraftstoffpumpe angeordnet ist, so dass letztere auch bei niedrigem Kraftstofffüllstand im Behälter nicht trocken läuft oder Förderlücken entstehen, am Behälterboden fixiert anzuordnen.

Ein Kunststoffbehälter der eingangs genannten Art ist aus DE 10 2013 226295 A1 bekannt. Dort wird ein Schwalltopf über eine Einhakverbindung und eine Rastverbindung mit einem im Kraftstoffbehälter befestigten Halteelement verbunden. Die Einhakverbindung ermöglicht zusammen mit einem Stützelement eine Fixierung des Schwalltopfs in einer Ebene, jedoch ist der diesbezügliche Montageaufwand bei der Herstellung des Kraftstoffbehälters recht hoch.

Der Erfindung liegt demnach die Aufgabe zugrunde, den Einbaukörper auf sichere Weise und ohne hohen Montageaufwand oder umfangreiche Zusatzkomponenten am Behälterboden zu fixieren.

Zur Lösung dieser Aufgabe werden die in den Patentansprüchen 1 und 10 angegebenen Merkmalskombinationen vorgeschlagen. Vorteilhafte Ausgestaltungen und Weiterbildungen der Erfindung ergeben sich aus den abhängigen Ansprüchen.

Um beispielsweise Kunststoffschweißvorgänge bei der Anordnung des Einbaukörpers in dem Behälter zu vermeiden, ist gemäß der Erfindung ein Ringkörper vorgesehen, der an einem Endbereich des Einbaukörpers angeordnet ist, wobei der Ringkörper in eine Hinterschnittpartie in der Behälterwandung und der Einbaukörper in den Ringkörper gerastet ist. Der Einbaukörper ist vorzugsweise als Tankmodul zur Aufnahme einer Kraftstoffpumpe und Bevorratung eines Kraftstoffvolumens ausgebildet.

Die Herstellung der Hinterschnittpartie in der Behälterwandung kann in einer Blasform durch von außen auf die Behälterwandung wirkende, in der Blasform beweglich angeordnete Schieber erfolgen. Alternativ kann die Hinterschnittpartie in der Behälterwandung durch ein in eine Blasform eingelegtes Formteil hergestellt sein.

Die Hinterschnittpartie ist zweckmäßig im Wesentlichen kreisförmig ausgebildet und kann aus mindestens zwei, vorzugsweise drei separaten Abschnitten bestehen.

In bevorzugter Ausgestaltung der Erfindung weist der Ringkörper behälterwandseitige, nach außen weisende Halterippen auf, deren freie Enden vor dem Einrasten des Einbaukörpers in den Ringkörper auf einem Kreis liegen, dessen Durchmesser d kleiner ist als der Durchmesser D eines Kreises, der den freien Innendurchmesser der Hinterschnittpartie definiert. Weiterhin kann der Ringkörper eine zylindrische Wandpartie mit Durchbrechungen aufweisen, in die Rastvorsprünge an einer Außenwandpartie des Einbaukörpers einrastbar sind.

Zweckmäßig ist die die Rastvorsprünge aufweisende Außenwandpartie des Einbaukörpers im Wesentlichen zylindrisch ausgebildet, mit einem Durchmesser, der höchstens dem Durchmesser D des freien Innendurchmessers der Hinterschnittpartie abzüglich der Dicke der die Durchbrechungen aufweisenden Wandpartie des Ringkörpers beträgt. Wenn die vorgenannten Abmessungen genau aufeinander abgestimmt sind, ist eine spielfreie Fixierung des Einbauköpers an der Behälterwandung sichergestellt.

Das erfindungsgemäße Verfahren zum Einbau eines Einbaukörpers in einen Kunststoffbehälter, vorzugsweise eines Tankmoduls in einen Kunststoff-Kraftstoffbehälter, umfasst die folgenden Schritte:
- Einbringen einer Hinterschnittpartie in eine Behälterwand auf der Behälterinnenseite;
- Vormontage eines Ringkörpers und des Einbaukörpers;
- Positionierung von Halterippen des Ringkörpers in der Hinterschnittpartie;
- Einpressen des Einbaukörpers in den Ringkörper, wobei zum einen der Einbauköper in den Ringkörper und zum anderen der Ringkörper in die Hinterschnittpartie eingerastet wird.

Beim Einrasten des Ringkörpers in die Hinterschnittpartie können eine die Halterippen tragende Partie des Ringkörpers aufgespreizt und die Halterippen in die Hinterschnitte der Hinterschnittpartie gedrückt werden. Weiterhin können beim Einrasten des Einbaukörpers in den Ringkörper Rastvorsprünge an einer in den Ringkörper eingeführten, zylinderförmigen Wandpartie des Einbaukörpers in Durchbrechungen in einer komplementären Wandpartie des Ringkörpers eingerastet werden.

Bevorzugt wird die Hinterschnittpartie in der Behälterwand von außen im Zuge eines Formens des Behälters in einer Blasform hergestellt. Dies kann zum, einen durch in der Blasform angeordnete Schieber erfolgen, oder alternativ durch ein in die Blasform eingelegtes Formteil, um das die Behälterwandung beim Blasformen unter Schaffung der Hinterschnittpartie geformt wird. Während Schieber in der Blasform bei jedem neuen Formvorgang erneut verwendet werden können, ist für jeden neuen Behälter ein neues Formteil bereitzustellen, das dann in der Behälterwandung verbleibt, allerdings können dann die Schieber in der Blasform entfallen, so dass diese weniger aufwändig gestaltet ist.

Im Folgenden wird die Erfindung anhand eines in der Zeichnung in schematischer Weise dargestellten Ausführungsbeispiels näher erläutert. Es zeigen
- Fig. 1a: und b eine schematische Darstellung der Herstellung einer Hinterschnittpartie mittels Schiebern in einer Blasform;
- Fig. 2: eine perspektivische Ansicht eines Formteils zur Herstellung einer Hinterschnittpartie in einer Blasform, wobei das Formteil in die Blasform eingelegt wird und von außen auf die Behälterwandung wirkt;
- Fig. 3: eine schematische Ansicht einer Hinterschnittpartie an der Innenseite einer Behälterwandung;
- Fig. 4: eine schematische Ansicht eines Einbaukörpers und eines Ringkörpers in einem vormontierten Zustand;
- Fig. 5: die Positionierung des Einbaukörpers und des Ringkörpers gemäß Fig. 4 in der Hinterschnittpartie vor der Endmontage; und
- Fig. 6: die Endposition des Einbaukörpers und des Ringkörpers gemäß Fig. 4 nach der Montage in der Hinterschnittpartie.

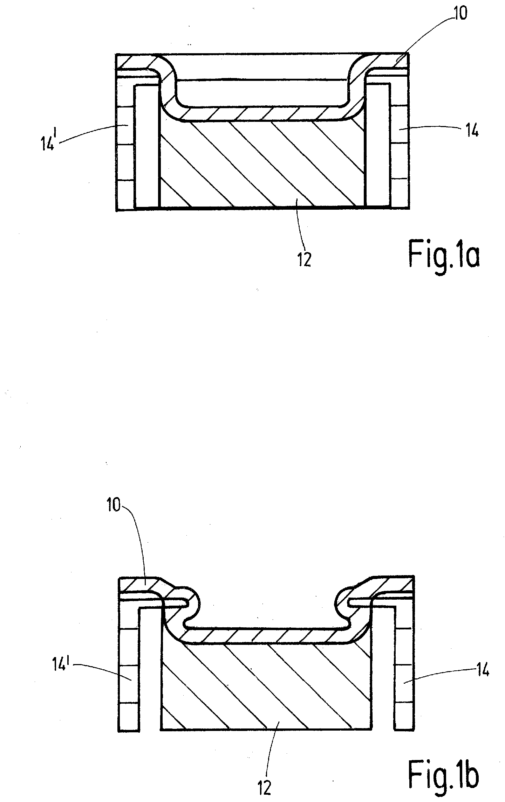

Fig. 1 zeigt vereinfacht dargestellt die Herstellung einer Hinterschnittpartie in einer Behälterwandung 10 eines im übrigen nicht näher dargestellten Kunststoffbehälters in einer Blasform 12. Die Behälterwandung 10 wird in einen leicht versenkten, etwa kreisförmigen Bereich der Blasform 12 geformt (Fig. 1a), so dass seitlich zum versenkten Bereich angeordnete Schieber 14, 14' zueinander hin verfahren werden können (Fig. 1b) und dabei in einem gewissen Abstand vom Boden des versenkten Bereichs das fließfähig erwärmte Material der Behälterwandung 10 verformen und damit die Hinterschnittpartie bilden. Es können durchaus mehr als zwei Schieber verwendet werden, die in gleichen oder ungleichen Umfangsabständen auf einem Kreis angeordnet sind und die jeweils einen kreisabschnittsförmigen Bereich der Hinterschnittpartie formen.

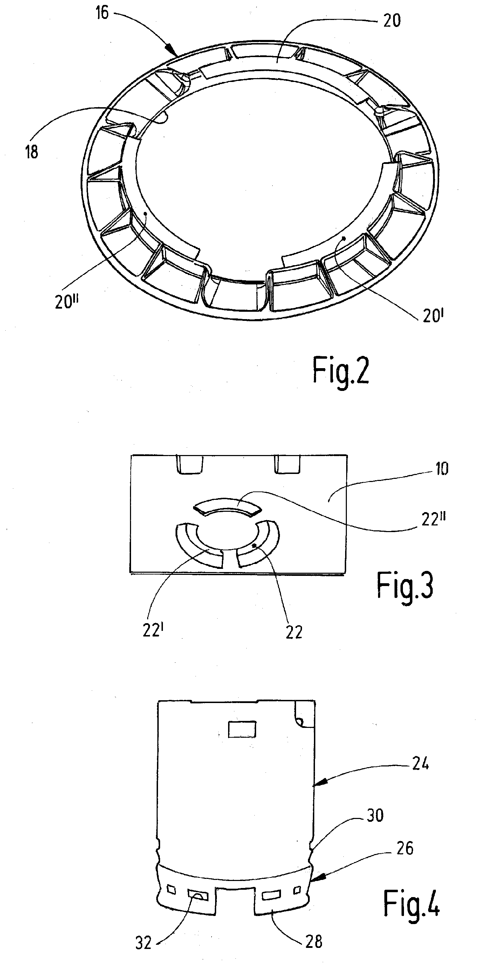

Alternativ kann das in Fig. 2 dargestellte Formteil 16 zur Herstellung der Hinterschnittpartie verwendet werden. Das Formteil ist ringförmig mit einer zentralen Durchbrechung 18, die den Durchmesser der Hinterschnittpartie definiert. Das Formteil 16 wird vor dem Beginn des Blasformvorgangs in die Blasform an der Stelle eingelegt, an der die Hinterschnittpartie geschaffen werden soll. Beim Formen der Behälterwandung befindet sich das Formteil 16 zwischen der Blasform und der Außenseite der Behälterwandung. Das Formteil 16 weist im Abstand von einer gedachten Basisebene drei nach innen weisende, teilkreisförmige Rippen 20, 20', 20" auf, die von dem Material der Behälterwandung umflossen werden und auf der Innenseite der Behälterwandung drei entsprechende Hinterschnittabschnitte bilden (vgl. Fig. 3). Das Formteil ist nach dem Blasformen weitgehend in die Behälterwandung eingeformt und verbleibt somit am Behälter; es handelt sich also um ein nicht wiederverwendbares Verlustteil.

Fig. 3 zeigt eine Ansicht der Innenwand des Behälters mit einer durch drei Hinterschnittabschnitte 22, 22', 22" gebildeten Hinterschnittpartie, die durch eine der zwei voranstehend beschriebenen Methoden gebildet sein kann.

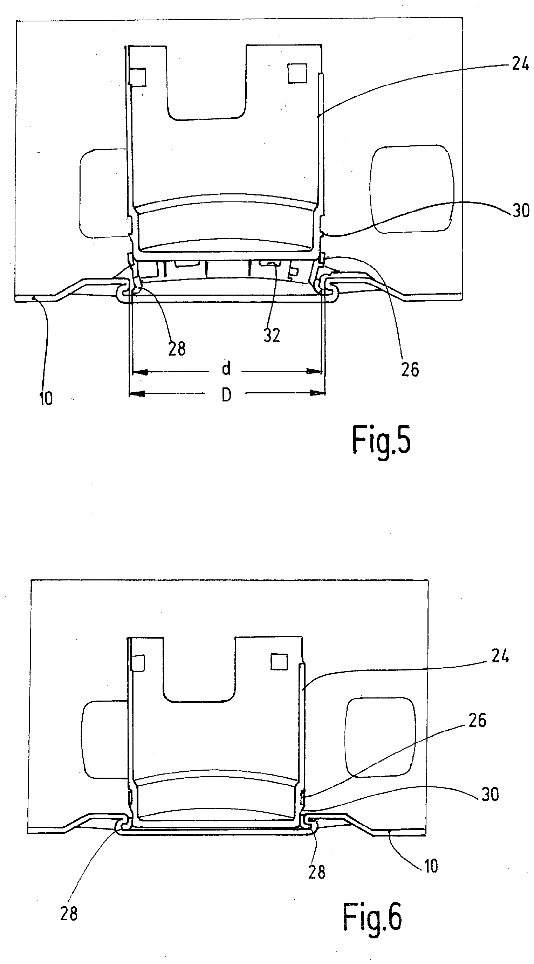

Fig. 4 zeigt einen als Tankmodul ausgebildeten Einbaukörper 24 und einen Ringkörper 26. Der Einbaukörper 24 und der Ringkörper 26 befinden sich in einem vormontierten oder teilmontierten Zustand, bei dem eine bodenseitige Partie des Einbaukörpers 24 teilweise in einen im Ringinneren gebildeten Raum eingesteckt ist und die zwei Teile höchstens reibschlüssig zusammengehalten werden. Im Bereich seines freien oder bodenseitigen Endes weist der Ringkörper 26 eine Mehrzahl nach außen weisender, segmentierter Halterippen 28 auf, deren Umkreis wie ersichtlich einen Durchmesser d aufweist, der kleiner ist als der Durchmesser D eines Innenkreises der Hinterschnittabschnitte 22, 22', 22", d.h. der Bereich des Ringkörpers 26 mit den Halterippen 28 lässt sich bis zur Behälterwandung an den Hinterschnittabschnitten 22, 22', 22" vorbei in die Hinterschnittpartie einführen, wie in Fig. 5 dargestellt ist. Selbstverständlich lassen sich der Ringkörper 26 und der Einbaukörper 24 auch getrennt und in dieser Reihenfolge nacheinander in der Hinterschnittpartie montieren.

Fig. 5 zeigt die in die Hinterschnittpartie eingeführte Kombination aus Einbaukörper 26 und Ringkörper 26. Der Einbaukörper wird von dieser Zwischenstellung aus in Richtung der Behälterwandung 10 geschoben. Dabei wird der Bereich der Halterippen 28 des Ringkörpers 26 aufgespreizt und die Halterippen 28 treten in die Hinterschnitte ein. Gleichzeitig rasten Rastvorsprünge 30 an der Außenseite der bodenseitigen Partie des Einbaukörpers 24 in komplementäre Durchbrechungen 32 in der zylindrischen Wandung des Ringkörpers 26 ein, so dass der Ringkörper 26 in der Hinterschnittpartie und der Einbaukörper 24 in dem Ringkörper fixiert ist, wie Fig. 6 zeigt. Die jeweiligen Abmessungen der Hinterschnittpartie, des Ringkörpers 26 und des Einbaukörpers 24 sind so gewählt, dass der Einbaukörper im Wesentlichen spielfrei an der Behälterwandung 10 montiert ist.

Zusammenfassend ist folgendes festzustellen: Die Erfindung betrifft einen Kunststoffbehälter, insbesondere Kunststoff-Kraftstoffbehälter, mit einem im Behälterinneren angeordneten, topfartigen Einbaukörper 24, sowie ein Verfahren zu dessen Herstellung. Gemäß der Erfindunbg ist ein Ringkörper 26 vorgesehen, der an einem Endbereich des Einbaukörpers 24 angeordnet ist, wobei der Ringkörper 26 in eine Hinterschnittpartie in der Behälterwandung 10 und der Einbaukörper 24 in den Ringkörper 26 gerastet ist.

## Patentansprüche

1. Kunststoffbehälter, insbesondere Kunststoff-Kraftstoffbehälter, mit einem im Behälterinneren angeordneten, topfartigen Einbaukörper (24), **gekennzeichnet durch** einen Ringkörper (26), der an einem Endbereich des Einbaukörpers (24) angeordnet ist, wobei der Ringkörper (26) in eine Hinterschnittpartie in der Behälterwandung (10) und der Einbaukörper (24) in den Ringkörper (26) gerastet ist.

2. Kunststoffbehälter nach Anspruch 1, **dadurch gekennzeichnet, dass** der Einbaukörper (24) als Tankmodul zur Aufnahme einer Kraftstoffpumpe ausgebildet ist.

3. Kunststoffbehälter nach Anspruch 1 oder 2, **dadurch gekennzeichnet, dass** die Hinterschnittpartie in der Behälterwandung (10) in einer Blasform (12) durch von außen auf die Behälterwandung (10) wirkende, in der Blasform (12) beweglich angeordnete Schieber (14, 14') hergestellt ist.

4. Kunststoffbehälter nach Anspruch 1 oder 2, **dadurch gekennzeichnet, dass** die Hinterschnittpartie in der Behälterwandung (10) durch ein in eine Blasform (12) eingelegtes Formteil (16) hergestellt ist.

5. Kunststoffbehälter nach einem der Ansprüche 1 bis 4, **dadurch gekennzeichnet, dass** die Hinterschnittpartie im Wesentlichen kreisförmig ausgebildet ist.

6. Kunststoffbehälter nach einem der Ansprüche 1 bis 5, **dadurch gekennzeichnet, dass** die Hinterschnittpartie aus mindestens zwei, vorzugsweise drei separaten Abschnitten besteht.

7. Kunststoffbehälter nach einem der Ansprüche 1 bis 6, **dadurch gekennzeichnet, dass** der Ringkörper (26) behälterwandseitige, nach außen weisende Halterippen (28) aufweist, deren freie Enden vor dem Einrasten des Einbaukörpers (24) in den Ringkörper (26) auf einem Kreis liegen, dessen Durchmesser d kleiner ist als der Durchmesser D eines Kreises, der den freien Innendurchmesser der Hinterschnittpartie definiert.

8. Kunststoffbehälter nach einem der Ansprüche 1 bis 7, **dadurch gekennzeichnet, dass** der Ringkörper (26) eine zylindrische Wandpartie mit Durchbrechungen (32) aufweist, in die Rastvorsprünge (30) an einer Außenwandpartie des Einbaukörpers (24) einrastbar sind.

9. Kunststoffbehälter nach Anspruch 8, **dadurch gekennzeichnet, dass** die die Rastvorsprünge (30) aufweisende Außenwandpartie des Einbaukörpers (24) im Wesentlichen zylindrisch ausgebildet ist mit einem Durchmesser, der höchstens dem Durchmesser D des freien Innendurchmessers der Hinterschnittpartie abzüglich der Dicke der die Durchbrechungen (32) aufweisenden Wandpartie des Ringkörpers (26) beträgt.

10. Verfahren zum Einbau eines Einbaukörpers (24) in einen Kunststoffbehälter, vorzugsweise eines Tankmoduls in einen Kunststoff-Kraftstoffbehälter, umfassend die folgenden Schritte:
- Einbringen einer Hinterschnittpartie in eine Behälterwandung (10) auf der Behälterinnenseite;
- Vormontage eines Ringkörpers (26) und des Einbaukörpers (24);
- Positionierung von Halterippen (28) des Ringkörpers (26) in der Hinterschnittpartie;
- Einpressen des Einbaukörpers (24) in den Ringkörper (26), wobei zum einen der Einbauköper (24) in den Ringkörper (26) und zum anderen der Ringkörper (26) in die Hinterschnittpartie eingerastet wird.

11. Verfahren nach Anspruch 10, **dadurch gekennzeichnet, dass** beim Einrasten des Ringkörpers (26) in die Hinterschnittpartie eine die Halterippen (28) tragende Partie des Ringkörpers (26) aufgespreizt und die Halterippen (28) in die Hinterschnitte der Hinterschnittpartie gedrückt werden.

12. Verfahren nach Anspruch 10 oder 11, **dadurch gekennzeichnet, dass** beim Einrasten des Einbaukörpers (24) in den Ringkörper (26) Rastvorsprünge (30) an einer in den Ringkörper (26) eingeführten, zylinderförmigen Wandpartie des Einbaukörpers (24) in Durchbrechungen (32) in einer komplementären Wandpartie des Ringkörpers (26) einrasten.

13. Verfahren nach einem der Ansprüche 10 bis 12, **dadurch gekennzeichnet, dass** die Hinterschnittpartie in der Behälterwandung (10) von außen im Zuge eines Formens des Behälters in einer Blasform (12) hergestellt wird.

14. Verfahren nach Anspruch 13, **dadurch gekennzeichnet, dass** die Hinterschnittpartie durch in der Blasform (12) angeordnete Schieber (14, 14') hergestellt wird.

15. Verfahren nach Anspruch 13, **dadurch gekennzeichnet, dass** die Hinterschnittpartie durch ein in die Blasform (12) eingelegtes Formteil (16) hergestellt wird.

## Claims

1. A plastic container, in particular a plastic fuel tank, with a pot-like installation body (24) arranged on the inside of the tank, **characterized by** a ring body (26) which is arranged on an end portion of the installation body (24), wherein the ring body (26) is engaged in an undercut section in the tank wall (10), and the installation body (24) is engaged in the ring body (26).

2. The plastic container according to claim 1, **characterized in that** the installation body (24) is configured as a tank module configured for receiving a fuel pump.

3. The plastic container according to claim 1 or 2, **characterized in that** the undercut section in the tank wall (10) is formed in a blow mold (12) by means of sliders (14, 14') acting on the tank wall (10) from the outside and movably arranged in the blow mold (12).

4. The plastic container according to claim 1 or 2, **characterized in that** the undercut section in the tank wall (10) is formed by a shaped part (16) placed in a blow mold (12).

5. The plastic container according to one of claims 1 to 4, **characterized in that** the undercut section is configured to be substantially circular.

6. The plastic container according to one of claims 1 to 5, **characterized in that** the undercut section consists of at least two, preferably three separate portions.

7. The plastic container according to one of claims 1 to 6, **characterized in that** on the side of the tank wall,the ring body (26) has outward facing retaining ribs (28), the free ends of which, prior to the engaging of the installation body (24) in the ring body (26), lie on a circle having a smaller diameter d than the diameter D of a circle which defines the free inner diameter of the undercut section.

8. The plastic container according to one of claims 1 to 7, **characterized in that** the ring body (26) has a cylindrical wall section with openings (32), in which engaging protrusions (30) on an outer wall section of the installation body (24) can be engaged.

9. The plastic container according to claim 8, **characterized in that** the outer wall section of the installation body (24) having the engaging protrusions (30) is configured so as to be substantially cylindrical with a diameter which is at most the diameter D of the free inner diameter of the undercut section minus the thickness of the wall section of the ring body (26) having the openings (32).

10. A method for installing an installation body (24) in a plastic container, preferably a tank module in a plastic fuel tank, comprising the following steps:
- introducing an undercut section in a tank wall (10) on the inside of the tank;
- pre-mounting a ring body (26) on the installation body (24);
- positioning retaining ribs (28) of the ring body (26) in the undercut section;
- pressing the installation body (24) into the ring body (26), wherein the installation body (24) is snapped into the ring body (26), and the ring body (26) into the undercut section.

11. The method according to claim 10, **characterized in that** when the ring body (26) engages in the undercut section, a section of the ring body (26) carrying the retaining ribs (28) is spread open, and the retaining ribs (28) are pressed into the undercuts of the undercut section.

12. The method according to claim 10 or 11, **characterized in that** when the installation body (24) engages in the ring body (26), engaging protrusions (30) formed on a cylindrical wall section of the installation body (24), which is introduced into the ring body (26), and engage in openings (32) in a complementary wall section of the ring body (26).

13. The method according to one of claims 10 to 12, **characterized in that** the undercut section in the tank wall (10) is produced from the outside in the course of molding the tank in a blow mold (12).

14. The method according to claim 13, **characterized in that** the undercut section is produced by sliders (14, 14') arranged in the blow mold (12).

15. The method according to claim 13, **characterized in that** the undercut section is produced by a shaped part (16) placed in the blow mold (12).

## Revendications

1. Réservoir en plastique, en particulier réservoir de carburant en plastique, avec un insert (24) de type pot agencé dans l'intérieur de réservoir, **caractérisé par** un tore (26) agencé au niveau d'une région terminale de l'insert (24), dans lequel le tore (26) est encliqueté dans une partie en contre-dépouille de la paroi de réservoir (10) et l'insert (24) est encliqueté dans le tore (26).

2. Réservoir en plastique selon la revendication 1, **caractérisé en ce que** l'insert (24) est réalisé sous forme de module de remplissage destiné à recevoir une pompe à carburant.

3. Réservoir en plastique selon la revendication 1 ou 2, **caractérisé en ce que** la partie en contre-dépouille de la paroi de réservoir (10) est produite dans un moule de soufflage (12) grâce à des coulisses (14, 14') agencées mobiles dans le moule de soufflage (12) et agissant depuis l'extérieur sur la paroi de réservoir (10).

4. Réservoir en plastique selon la revendication 1 ou 2, **caractérisé en ce que** la partie en contre-dépouille est produite dans la paroi de réservoir (10) grâce à une pièce moulée (16) installée dans un moule de soufflage (12).

5. Réservoir en plastique selon l'une quelconque des revendications 1 à 4, **caractérisé en ce que** la partie en contre-dépouille est réalisée sous une forme essentiellement circulaire.

6. Réservoir de carburant selon l'une quelconque des revendications 1 à 5, **caractérisé en ce que** la partie en contre-dépouille est constituée d'au moins deux, de manière préférée trois, sections distinctes.

7. Réservoir en plastique selon l'une quelconque des revendications 1 à 6, **caractérisé en ce que** le tore (26) présente des nervures de retenue (28) orientées vers l'extérieur, situées du côté paroi de réservoir, et dont les extrémités libres, avant l'encliquetage de l'insert (24) dans le tore (26), se trouvent sur un cercle dont le diamètre d est inférieur au diamètre D d'un cercle qui définit le diamètre intérieur libre de la partie en contre-dépouille.

8. Réservoir en plastique selon l'une quelconque des revendications 1 à 7, **caractérisé en ce que** le tore (26) présente une partie paroi cylindrique comportant des ajourages (32) dans lesquels des saillies d'encliquetage (30) peuvent être encliquetées au niveau d'une partie paroi extérieure de l'insert (24).

9. Réservoir en plastique selon la revendication 8, **caractérisé en ce que** la partie paroi extérieure, présentant les saillies d'encliquetage (30), de l'insert (24) est réalisée de manière essentiellement cylindrique avec un diamètre qui correspond au plus au diamètre D du diamètre intérieur libre de la partie en contre-dépouille, déduction faite de l'épaisseur de la partie paroi, présentant les ajourages (32), du tore (26).

10. Procédé d'installation d'un insert (24) au sein d'un réservoir en plastique, de manière préférée d'un module de remplissage au sein d'un réservoir de carburant en plastique, comprenant les étapes ci-dessous consistant à :
- mettre en place une partie en contre-dépouille dans une paroi de réservoir (10), sur le côté intérieur de réservoir ;
- assembler préalablement un tore (26) et l'insert (24) ;
- positionner les nervures de retenue (28) du tore (26) dans la partie en contre-dépouille ;
- enfoncer l'insert (24) dans le tore (26), dans lequel, d'une part, l'insert (24) est encliqueté dans le tore (26) et, d'autre part, le tore (26) est encliqueté dans la partie en contre-dépouille.

11. Procédé selon la revendication 10, **caractérisé en ce que**, lors de l'encliquetage du tore (26) dans la partie en contre-dépouille, une partie, supportant les nervures de retenue (28), du tore (26) s'étend et les nervures de retenue (28) sont poussées dans la contre-dépouille de la partie en contre-dépouille.

12. Procédé selon la revendication 10 ou 11, **caractérisé en ce que**, lors de l'encliquetage de l'insert (24) dans le tore (26), des saillies d'encliquetage (30) s'encliquètent dans des ajourages (32) d'une partie paroi complémentaire du tore (26) au niveau d'une partie paroi cylindrique, introduite dans le tore (26), de l'insert (24).

13. Procédé selon l'une quelconque des revendications 10 à 12, **caractérisé en ce que** la partie en contre-dépouille est produite dans la paroi de réservoir (10) depuis l'extérieur au cours d'un formage du réservoir dans un moule de soufflage (12).

14. Procédé selon la revendication 13, **caractérisé en ce que** la partie en contre-dépouille est produite grâce à des coulisses (14, 14') agencées dans le moule de soufflage (12).

15. Procédé selon la revendication 13, **caractérisé en ce que** la partie en contre-dépouille est produite grâce à une pièce moulée (16) installée dans le moule de soufflage (12).
